# EUROPEAN PATENT SPECIFICATION

(11) **EP 0 351 154 B1**
(45) Date of publication and mention of the grant of the patent: **14.12.1994**
(21) Application number: 89306960.9
(22) Date of filing: 10.07.1989
(51) Int. Cl.: B29C 33/56, B29C 33/38

(54) **Metal-coated plastic product mould and procedure for manufacturing the same**
Form mit Metallüberzug für Kunststoffgegenstände und Verfahren zu deren Herstellung
Moule revêtu de métal pour objet plastique et son procédé de fabrication

(30) Priority: 14.07.1988 FI 883349
(43) Date of publication of application: 17.01.1990
(73) Proprietor: NESTE OY, SF-02150 Espoo 15 (FI)
(72) Inventor: Jovero, Olli, SF-06100 Porvoo (FI); Kirmanen, Pauli, SF-06150 Porvoo (FI)
(74) Representative: Lamb, John Baxter

(56) References cited:
- FR-A- 1 243 682
- FR-A- 2 110 467
- FR-A- 2 159 231
- GB-A- 2 105 251
- PATENT ABSTRACTS OF JAPAN, vol. 4, no. 72 (M-13)[554], 27th May 1980;& JP-A-55 34 950 (MITSUBISHI DENKI K.K.) 11-03-1980

## Description

The present invention concerns a metal-coated plastic product mould and a procedure for manufacturing the same.

In manufacturing reinforced plastic products and plastic products made by casting, such a mould is usually employed into which the reinforced plastic is laminated or cast and from which the product after the hardening of the plastic can be detached. The quality of the surface of the plastic is highly important because it creates the exterior of the product.

A procedure of prior art to prepare plastic product moulds is a reinforced plastic layer to be laminated on top of a model piece, which thereafter, when appropriately strengthened, is used as the actual mould. The most common plastic raw material in that step is polyester resin. A drawback related to said moulds is poor heat and wear resistances, and its surface becomes easily cracked, which spoils the exterior of the products and shortens the life of the mould. Moulds have also prepared from epoxy resins, but the poor feature related thereto is the poor quality of the surface because it is difficult to provide the epoxy plastic with a non-porous surface. The plastic coated moulds are also sensitive to blows.

Such metal-coated moulds are also known in the art in which the underlayer is coated with a thin metal layer. The surface obtained by means of zinc injection is, however, porous and poor in quality, which affects the exterior of the products and encumbers the detaching of the product from the mould. Metal-coated moulds have also made by casting from aluminium or zinc, but the drawback related thereto is poor surface quality and poor stability of dimensions. Metal-coated moulds may also be produced using electrolytic procedures, for instance from nickel and copper, whereby a good quality is achieved, though the mould becomes costly. The best moulds are provided by machining from aluminium or steel, but hereby, the cost of the moulds rises very high, and the manufacturing of small or medium-sized product series with said moulds is not economical.

For that reason, a need exists to develop mould designs which are both wear resisting and good in their surface quality and which moreover are feasible to be renewed at a relatively low cost. The object of the present invention is therefore a metal-coated plastic product mould and a procedure for producing a metal-coated plastic product mould in which a good quality of the surface and good wear resistance are achieved. A second object of the present invention is a metal-coated plastic product mould and a procedure for producing a metal coated plastic product mould provided with a good heat resistance. One more mould and a procedure for manufacturing such a metal-coated plastic product mould which in costs and production method is so advantageous that multiplying and repairing said mould is feasible.

According to a first embodiment of the invention there is provided a metal-coated mould for manufacturing plastic products, which mould comprises a backing or supporting layer (40) having a surface consistent with the shape of the product, and a replaceable thin metal layer (30) in contact with said backing layer, characterized in that the metal layer has been produced by stretching a thin metal sheet against a surface consistent with the shape of the product by using deep drawing, liquid bulging or explosion forming technique, thereby to form a replaceable mould surface to be placed in contact with the backing layer.

The invention also provides a process for producing a metal-coated mould for manufacturing plastic products, which mould comprises a backing or supporting layer (40) having a surface consistent with the shape of the product, and a replaceable thin metal layer (30) in contact with the backing layer, characterized in that the metal layer is produced by stretching a thin metal sheet against a surface consistent with the shape of the product by using a deep drawing, liquid bulging or explosion forming technique, thereby forming a replaceable mould surface to be placed in contact with the backing layer.

Deep drawing in the present context refers to a technique in which a rather thin metal sheet is pressed on top of a model piece, whereby it is moulded to adopt the shape of the model piece. The procedure sets no very high requirements concerning strength for the pieces to be used for model and pressing tool, and the surface of the mould surface blank thus obtained is good. Several mould surface blanks can be produced at the same time, which reduces renovation costs of said moulds. The material can be selected according to the purpose, and in that way, for material can be used any deep-drawable metal sheet. The thickness of said metal sheet is selected according to the use, but in the procedure of the invention, even very thin materials can be applied because, as taught by the basic idea of the invention, the metallic mould surface blank is attached to a separate backing layer which holds the mould blank in its final shape.

Other procedures corresponding to deep drawing for producing a mould blank are liquid bulging and explosion shaping. In the former instance, the pressing tool employed in the deep drawing is replaced by liquid pressure provided by pumping liquid into a space formed above sheet blank on top of a specimen. The liquid pressure presses and bends the metal sheet blank against the surface the specimen thereby stretching and bending it to adapting itself to the shape of the specimen. A third technique corresponding to deep drawing is so-called explosive shaping in which the pressure required for the shaping is provided by exploding an appropriate explosive charge in the enclosed space provided on top of a metal sheet blank, whereby the pressure impact formed thereby forces the metal sheet blank to adapt itself to the shape of the specimen.

A mould surface blank produced in which one of the above described shaping techniques has been used cannot be utilized as such directly as a plastic product mould, but it is, as taught by the invention, first fixed to a backing layer, the shape thereof being consistent with the shape of the mould surface blank. The backing layer supports the mould surface blank and holds it in its form. Also heating and/or cooling elements may readily be placed in the backing layer, for instance passages or resistance wires, with the aid of which the hardening of the product can be regulated in the course of manufacturing said product. The backing layer also makes repairing and/or renovation of the cast mould feasible in that the mould surface blank is completely or partly removed from the backing layer and replaced completely or partly by a new mould surface blank.

The backing layer may be produced using any technique. The main thing is that a layer which sufficiently adapts itself to the shape of the mould surface blank can be produced therefrom so that its strength properties are adequate, and that it is attachable to the mould surface blank. The backing layer may be produced e.g. by casting from plastic, such as epoxy plastic, polyester, plastic concrete, concrete or metal, and it may contain reinforcing or gripping members, layers or fibres. Establishing a support layer may be carried out either directly on top of a mould surface blank or on top of a separate specimen. Backing layers produced by machining are also feasible. The mould surface blank can be fixed to the backing layer using any technique. Therefore, for instance glueing technique, lamination technique can be employed and, in the instance when metal support layers are used, also welding or soldering technique. A basic prerequisite is that the backing layer and the mould surface blank remain fixed to one another in manufacturing said product.

The invention is described in the following more in detail with the aid of the drawing attached, wherein
Fig. 1 presents in cross-section manufacturing a mould surface blank by deep drawing technique;
Fig. 2 presents in cross-section manufacturing a mould surface blank by liquid bulging method;
Fig. 3 presents in cross-section manufacturing a mould surface blank by explosion method, and
Fig. 4 presents in cross-section the plastic product mould of the invention.

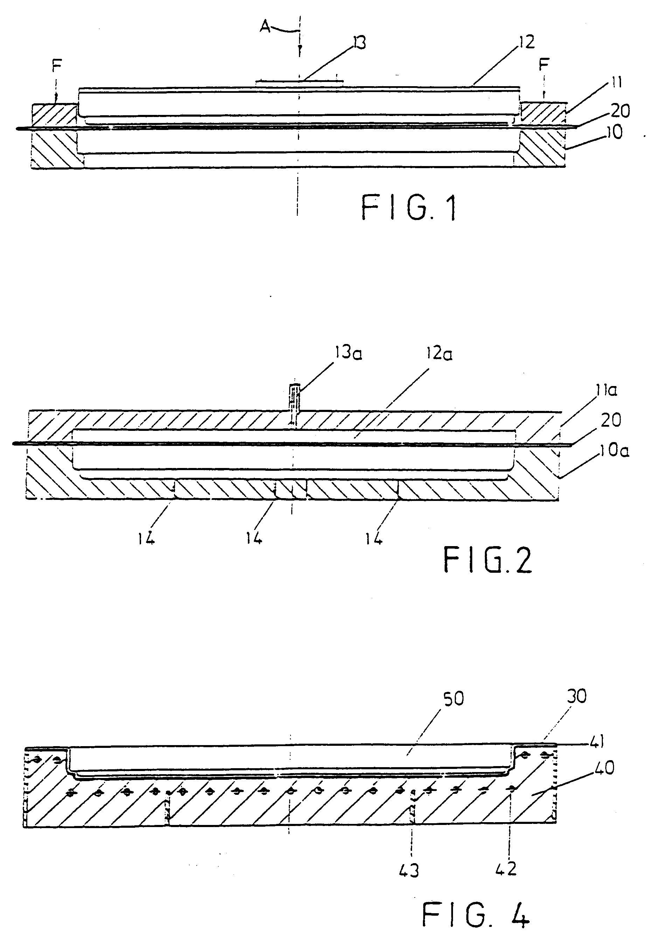

In the embodiment of Fig. 1, the mould surface blank is produced for a product which is rather low in profile. With reference numeral 10 is indicated a draw ring, its inner surface being formed to conform to the shape of the product. A sheet stopper 11 holds in place a metal sheet 20 from which the mould surface blank is produced. A ram 12, the shape of which also is consistent with the shape of the mould surface blank to be produced, is at point 13 pressed against the metal sheet 20, owing to the compression force (arrow A) directed at said ram and forces it to stretch and be moulded against the surface of the draw ring 10. Either the specimen of the desired end product or a separate piece produced to conform thereto may constitute said ram 12. When using relatively thin sheets, no very high strength properties need be set for the strength of the ram because the mould surface blank being formed will later be supported to the backing layer.

In the embodiment as in Fig. 2 a similar mould surface blank is produced as the one presented in Fig. 1, now using the liquid bulging method. With reference numeral 10a is presented a lower mould, its inner surface being formed to be consistent with the shape of the product. The upper mould 11a holds the metal sheet 20 in place in that between the metal sheet 20 and the upper mould is defined a liquid space 12a, whereto pressurized liquid is conducted from a connector 13a. The pressurized liquid forces the sheet 20 downwards, whereby it stretches and moulds itself to the surface of the lower mould 10a. With reference numeral 14 are indicated air outlet passages.

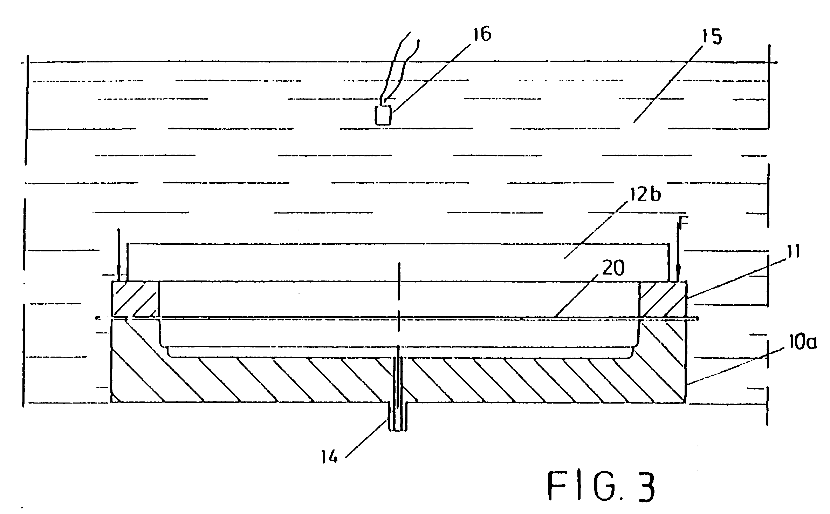

In the embodiment of Fig. 3 a similar mould surface blank is produced as in Fig. 1, but using the explosion method. With reference numeral 10a is presented a lower mould, the inner sruface whereof is formed to be consistent with the shape of the product. A sheet stopper 11 holds in place the metal sheet 20 from which the mould surface blank is produced. On top of the sheet stopper 11 is placed an air cellular structure 12b which relieves the explosion pressure. Above the air cell 12b is placed the explosive charge 16. The whole structure has been positioned in a liquid volume 15 which when the explosive charge 16 explodes leads the pressure wave through the air cell 12b into the metal sheet 20, which stretches and moulds itself to the surface of the lower mould 10a. With reference numeral 14 is indicated an air outlet duct.

Fig. 4 presents a mould structure of the invention. With reference numeral 30 is indicated a mould surface blank which has been produced with any technique shown in Fig. 1, 2 or 3. With reference numeral 40 is indicated the backing layer whereto the mould surface blank 30 is fixed in the present embodiment with the aid of a gripping layer 41. With reference numeral 42 are indicated the heating and/or cooling members with which the backing layer 40 can be heated and/or cooled, and with reference numeral 43, backing elements placed in the backing layer 40. The mould can now be used as a casting mould or laminating when producing products 50.

It is obvious that in the foregoing are described merely the basic principles of the procedure of the invention, within the scope of which a plurality of modifications can be accomplished without deviating from the scope of protection of the claims. Therefore, the mould structures described may only act as partial moulds when casting more complex plastic product pieces.

The moulds of the invention can be used in production processes for various plastic products. Typical production techniques are, for instance, injection moulding, compression moulding, blowing into a mould, vacuum moulding and reinforced plastic moulding.

## Claims

1. A metal-coated mould for manufacturing plastic products, which mould comprises a backing or supporting layer (40) having a surface consistent with the shape of the product, and a replaceable thin metal layer (30) in contact with said backing layer, characterized in that the metal layer has been produced by stretching a thin metal sheet against a surface consistent with the shape of the product by using deep drawing, liquid bulging or explosion forming technique, thereby to form a replaceable mould surface to be placed in contact with the backing layer.

2. Mould according to claim 1, characterized in that it comprises a gripping layer (41) between the mould surface blank (30) and the backing layer (40).

3. Mould according to claim 1 or 2, characterized in that the backing layer (40) is formed of a layer adapting itself to the shape of the mould surface blank (30) made of reinforced plastic, polymer concrete or standard concrete, or other material which resists stresses directed at the mould.

4. Mould according to any one of the preceding claims, characterised in that the support layer (40) comprises heating and/or cooling members (42).

5. A process for producing a metal-coated mould for manufacturing plastic products, which mould comprises a backing or supporting layer (40) having a surface consistent with the shape of the product, and a replaceable thin metal layer (30) in contact with the backing layer, characterized in that the metal layer is produced by stretching a thin metal sheet against a surface consistent with the shape of the product by using a deep drawing, liquid bulging or explosion forming technique, thereby forming a replaceable mould surface to be placed in contact with the backing layer.

6. Process according to claim 5, characterized in that the fixing of the mould surface blank (30) is accomplished using an appropriate gripping surface (41) between the mould surface blank (30) and the backing layer (40).

7. Process according to claim 5 or 6, characterized in that the backing layer (40) is formed of a backing layer moulding itself to the shape of the mould surface blank, said layer being produced from reinforced plastic, polymer concrete or standard concrete, or other material which resists stresses directed at the mould.

8. Process according to claim 7, characterized in that the backing layer (40) is provided with heating and/or cooling members (42).

9. Process according to any one of claims 5-8, characterized in that the backing layer (40) is produced by casting or otherwise moulding on top of said mould surface blank (30).

## Patentansprüche

1. Form mit Metallüberzug zur Herstellung von Kunststoffgegenständen, wobei die Form eine Unterlag- oder Trägerschicht (40) mit einer der Gestalt des Gegenstands entsprechenden Oberfläche sowie eine mit dieser Unterlagschicht in Berührung stehende, ersetzbare dünne Metallschicht (30) umfaßt, dadurch gekennzeichnet, daß die Metallschicht durch Strecken einer dünnen Metallfolie gegenüber einer der Gestalt des Gegenstands entsprechenden Fläche mittels einer Technik wie Tiefziehen, Ausbauchen mit Flüssigkeitsdruck oder Explosionsformung hergestellt wird, um dadurch eine ersetzbare, mit der Unterlagschicht in Berührung zu bringende Formfläche zu bilden.

2. Form nach Anspruch 1, dadurch gekennzeichnet, daß sie zwischen dem Formflächenrohling (30) und der Unterlagschicht (40) eine Haftschicht (41) aufweist.

3. Form nach Anspruch 1 oder 2, dadurch gekennzeichnet, daß die Unterlagschicht (40) durch eine Schicht gebildet ist, die sich der Gestalt des Formflächenrohlings (30) anpaßt und aus verstärktem Kunststoff, Polymerbeton oder Normalbeton oder einem anderen, gegen auf die Form gerichtete Spannungen widerstandsfähigen Werkstoff besteht.

4. Form nach einem der vorhergehenden Ansprüche, dadurch gekennzeichnet, daß die Trägerschicht (40) Heiz- und/oder Kühlelemente (42) enthält.

5. Verfahren zur Herstellung einer Form mit Metallüberzug zur Herstellung von Kunststoffgegenständen, wobei die Form eine Unterlag- oder Trägerschicht (40) mit einer der Gestalt des Gegenstands entsprechenden Oberfläche sowie eine mit der Unterlagschicht in Berührung stehende, ersetzbare dünne Metallschicht (30) umfaßt, dadurch gekennzeichnet, daß die Metallschicht durch Strecken einer dünnen Metallfolie gegenüber einer der Gestalt des Gegenstands entsprechenden Fläche mittels einer Technik wie Tiefziehen, Ausbauchen mit Flüssigkeitsdruck oder Explosionsformung hergestellt wird und dadurch eine ersetzbare, mit der Unterlagschicht in Berührung zu bringende Formfläche bildet.

6. Verfahren nach Anspruch 5, dadurch gekennzeichnet, daß die Befestigung des Formflächenrohlings (30) durch Verwendung einer entsprechenden Haftschicht (41) zwischen diesem und der Unterlagschicht (40) erfolgt.

7. Verfahren nach Anspruch 5 oder 6, dadurch gekennzeichnet, daß die Unterlagschicht (40) so ausgebildet wird, daß sie sich der Gestalt des Formflächenrohlings anschmiegt, wobei diese Schicht aus verstärktem Kunststoff, Polymerbeton oder Normalbeton oder einem anderen, gegen auf die Form gerichtete Spannungen widerstandsfähigen Werkstoff hergestellt wird.

8. Verfahren nach Anspruch 7, dadurch gekennzeichnet, daß die Unterlagschicht (40) mit Heiz- und/oder Kühlelementen (42) versehen wird.

9. Verfahren nach einem der Ansprüche 5-8, dadurch gekennzeichnet, daß die Unterlagschicht (40) durch Gießen oder sonstige Formung über jenem Formflächenrohling (30) hergestellt wird.

## Revendications

1. Moule revêtu de métal pour la fabrication de produits en plastique, lequel moule comprend une couche de support (40) ayant une surface compatible avec la forme du produit, et une couche de métal mince remplaçable (30) en contact avec la couche de support, caractérisé en ce que la couche métallique a été produite par étirement d'une tôle métallique mince contre une surface compatible avec la forme du produit en ayant recours à un emboutissage profond, une technique de formage par explosion ou par évasement liquide permettant ainsi de former une surface de moule remplaçable à mettre en contact avec la couche de support.

2. Moule selon la revendication 1, caractérisé en ce qu'il comprend une couche de préhension (41) entre l'ébauche de surface de moule (30) et la couche de support (40).

3. Moule selon la revendication 1 ou 2, caractérisé en ce que la couche de support est constituée d'une couche s'adaptant elle-même à la forme de l'ébauche de surface de moule (30) réalisée en un plastique renforcé, en un béton de résine synthétique ou en un béton normalisé ou une autre matière résistant aux sollicitations dirigées sur le moule.

4. Moule selon l'une quelconque des revendications précédentes, caractérisé en ce que la couche de support (40) comprend les éléments de chauffage et/ou de refroidissement (42).

5. Procédé pour la production d'un moule revêtu de métal pour la fabrication de produits en plastique, lequel moule comprend une couche de support (40) avec une surface compatible avec la forme du produit, et une couche métallique mince remplaçable (30) en contact avec la couche de support, caractérisé en ce que la couche métallique est produite par étirement d'une tôle métallique mince contre une surface compatible avec la forme du produit en ayant recours à un emboutissage profond, à une technique de formage par explosion ou d'évasement liquide, permettant ainsi de former une surface de moule remplaçable à mettre en contact avec la couche de support.

6. Procédé selon la revendication 5, caractérisé en ce que la fixation de l'ébauche de surface de moule (30) est effectuée en utilisant une surface de préhension appropriée (41) entre l'ébauche de surface de moule (30) et la couche de support (40).

7. Procédé selon la revendication 5 ou 6, caractérisé en ce que la couche de support (40) est formée à partir d'une couche de support se moulant elle-même à la forme de l'ébauche de surface de moule, cette couche étant produite à partir d'un plastique renforcé, de béton de résine synthétique ou de béton normalisé ou d'une autre matière résistant aux sollicitations dirigées sur le moule.

8. Procédé selon la revendication 7, caractérisé en ce que la couche de support (40) est munie d'éléments de chauffage et/ou de refroidissement (42).

9. Procédé selon l'une quelconque des revendications 5-8, caractérisé en ce que la couche de support (40) est produite par coulée ou autre opération de moulage sur le dessus de l'ébauche de surface de moule (30).
